(19) Europäisches Patentamt
European Patent Office
Office européen des brevets

(11) Publication number: **0 045 650**
**B1**

(12) **EUROPEAN PATENT SPECIFICATION**

(45) Date of publication of patent specification: **30.01.85**

(51) Int. Cl.⁴: **B 23 H 1/00**

(21) Application number: **81303536.7**

(22) Date of filing: **03.08.81**

(54) **A wire-cut, electric discharge machining method.**

(30) Priority: **04.08.80 JP 106857/80**

(43) Date of publication of application:
**10.02.82 Bulletin 82/06**

(45) Publication of the grant of the patent:
**30.01.85 Bulletin 85/05**

(84) Designated Contracting States:
**DE FR GB**

(56) References cited:
**DE-A-2 218 492**

(73) Proprietor: **FANUC LTD**
**5-1, Asahigaoka 3-chome Hino-shi**
**Tokyo 191 (JP)**

(72) Inventor: **Nomura, Yoshiyuki**
**No. 3-27, Tamadaira, Hino-shi**
**Tokyo Hino-shataku 103, 191 (JP)**
Inventor: **Okuda, Kanemasa**
**No. 3-27, Tamadaira, Hino-shi**
**Tokyo Hino-shataku 108, 191 (JP)**
Inventor: **Ishii, Hisao**
**No. 1-10-18, Osawa, Mitaka-shi**
**Tokyo, 181 (JP)**

(74) Representative: **Billington, Lawrence Emlyn et al**
**HASELTINE LAKE & CO Hazlitt House 28**
**Southampton Buildings Chancery Lane**
**London WC2A 1AT (GB)**

**EP 0 045 650 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a wire-cut, electric discharge machining method.

In a wire-cut, electric discharge machine of the type in which a pulse-like voltage is applied across a linear electrode, such as a wire or the like, and a workpiece to produce therebetween a discharge for machining the workpiece into a desired configuration, the machining is usually started from a machining start hole made in the workpiece for the insertion thereinto of the wire.

Workpieces are mostly formed of iron or like material and heat treated. Since the machining start hole is usually made prior to the heat treatment, scale or the like is developed by the heat treatment on the inside of the machining start hole. Accordingly, in order to provide a good surface smoothness on the inner surface of the machining start hole, the scale or the like must be removed, for example by means of machining with a reamer, but the removing machining is difficult and time-consuming because the machining start hole is small and the scale sticks to the inside of the machining start hole.

In recent years there has often been employed a wire-cut, electric discharge machine such as shown in Fig. 1 which uses feed rollers 6 revolving with a wire 4 gripped therebetween in order to raise the wire, and a wire guide nozzle 5 guiding the wire 4 to move it upwards, automatically inserting its tip into a machining start hole 3 made in a workpiece 1. In the case where there is a relief 2 on the back of the workpiece 1 as shown in Fig. 1, however, the tip of the wire 4 may not sometimes be inserted into the machining start hole 3; therefore, there is a strong demand for improvement of the prior art in this respect. In Fig. 1 reference numeral 7 indicates a V-groove guide; 8 designates a conducting pin; 9 and 10 identify guide rollers; 11 denotes a brake; and 12 represents a wire reel.

According to the present invention there is provided a wire-cut, electric discharge machining method in which a wire is inserted into a machining start hole made in a workpiece to start electric discharge machining from the machining start hole, characterised in that a bush of conductive material is provided in a hole made in a workpiece to provide the machining start hole.

Preferred examples and embodiments of the present invention may provide or assist in providing a wire-cut, electric discharge machining method which may eliminate the influence of scale or the like developed by heat treatment on the inside of a machining start hole and, even if a relief exists on the back of a workpiece, may provide correct automatic insertion of the tip of the wire into the machining start hole.

Preferably the bush has good inner surface smoothness.

For a better understanding of the invention and to show how it may be put into practice reference will now be made by way of example to the accompanying drawings in which:

Fig. 1 is explanatory of a prior art example and has already been described;

Figs. 2 (A) and (B) are a sectional view and a top plan view illustrating an embodiment of workpiece in accordance with the present invention; and

Fig. 3 is explanatory of another embodiment of workpiece in accordance with the present invention, shown in use in a method which is in accordance with the present invention.

Figs. 2(A) and 2(B) are respectively a sectional view and a top plan view illustrating an embodiment of workpiece which is in accordance with the present invention. A cylindrical bush 22 of iron, brass or like conductive material, finished with high accuracy and with good surface smoothness on the inner surface thereof, is driven into a hole made in a workpiece 21 thereby to provide a machining start hole 23. This permits easy removal or avoidance of scale developed by heat treatment.

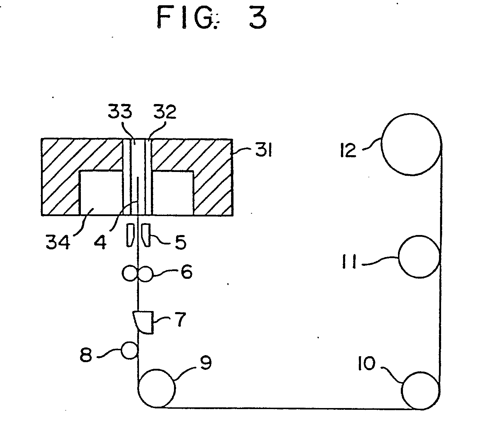

Fig. 3 is explanatory of another embodiment which is adapted to ensure insertion of the tip of the wire 4 into a machining start hole 33 in the case where a relief 34 exists on the back of a workpiece 31.

A cylindrical bush 32 made of iron, brass or other conductive material and having the same length as the thickness of the workpiece 31 is driven into a hole made in the workpiece 31 to provide the machining start hole 33. By this, the top end portion of the wire guide nozzle 5 can be brought closer to the bottom of the bush 32, so that the tip of the wire 4 brought up while being restricted by the wire guide nozzle 5 can positively be inserted into the close machining start hole 33. This avoids the situation shown in Fig. 1, where the wire 4 deflects before reaching the machining start hole 3. Also in this case, scale or the like developed by heat treatment can easily be removed or avoided as described previously. In Fig. 3, the parts corresponding to those in Fig. 1 are identified by the same references.

As has been described in the foregoing, in accordance with preferred embodiments of the present invention, a conductive bush is pressed into a hole made in a workpiece thereby to form a machining start hole, so that scale or the like developed by heat treatment can easily be removed and, even in the case where a relief is present on the back of the workpiece, the wire tip can automatically be inserted into the machining start hole positively.

It will be apparent that many modifications and variations may be effected without departing from the scope of this invention as defined by the following claims.

## Claims

1. A wire-cut, electric discharge machining method in which a wire is inserted into a machining start hole made in a workpiece to start electric discharge machining from the machining start hole, characterised in that a bush of conductive material is provided in a hole made in the workpiece to provide the machining start hole.

2. A method according to claim 1, wherein the bush was pressed into the hole made in the workpiece.

3. A method according to claim 1 or 2, wherein the workpiece is provided with a relief and the bush projects from the hole made in the workpiece by at least substantially the height of the relief.

4. A method according to any preceding claim, wherein the bush is made of iron.

5. A method according to any of claims 1 to 3, wherein the bush is made of brass.

**Revendications**

1. Un procédé d'électroérosion par fil dans lequel on introduit un fil dans un trou de départ d'usinage formé dans une pièce à usiner, pour commencer l'usinage par électroérosion à partir du trou de départ d'usinage, caractérisé en ce qu'on place une douille en matière conductrice dans un trou formé dans la pièce à usiner, pour former le trou de départ d'usinage.

2. Un procédé selon la revendication 1, dans lequel la douille a été introduite à la presse dans le trou formé dans la pièce à usiner.

3. Un procédé selon la revendication 1 ou 2, dans lequel la pièce à usiner comporte un dégagement, et la douille fait saillie à partir du trou formé dans la pièce à usiner, sur une distance au moins pratiquement égale à la hauteur du dégagement.

4. Un procédé selon l'une quelconque des revendications précédentes, dans lequel la douille est en fer.

5. Un procédé selon l'une quelconque des revendications 1 à 3, dans lequel la douille est en laiton.

**Patentansprüche**

1. Schneiddraht-Elektroerosionsverfahren, bei dem ein Draht in ein Bearbeitungsbeginnloch in einem Werkstück eingesetzt wird, um die Elektroerosionsbearbeitung von dem Bearbeitungsbeginnloch aus zu beginnen, dadurch gekennzeichnet, daß eine Buchse aus leitendem Material in einem Loch, das in dem Werkstück ausgebildet ist, vorgesehen ist, um das Bearbeitungsbeginnloch zu bilden.

2. Verfahren nach Anspruch 1, dadurch gekennzeichnet, daß die Buchse in das in dem Werkstück ausgebildete Loch eingedrückt ist.

3. Verfahren nach Anspruch 1 oder 2, dadurch gekennzeichnet, daß das Werkstück mit einer Aussparung versehen ist und daß die Buchse aus dem in dem Werkstück ausgebildeten Loch um zumindest im wesentlichen die Höhe der Aussparung vorsteht.

4 Verfahren nach einem der vorhergehenden Ansprüche, dadurch gekennzeichnet, daß die Buchse aus Eisen hergestellt ist.

5. Verfahren nach einem der Ansprüche 1 bis 3, dadurch gekennzeichnet, daß die Buchse aus Messing hergestellt ist.

FIG. 1

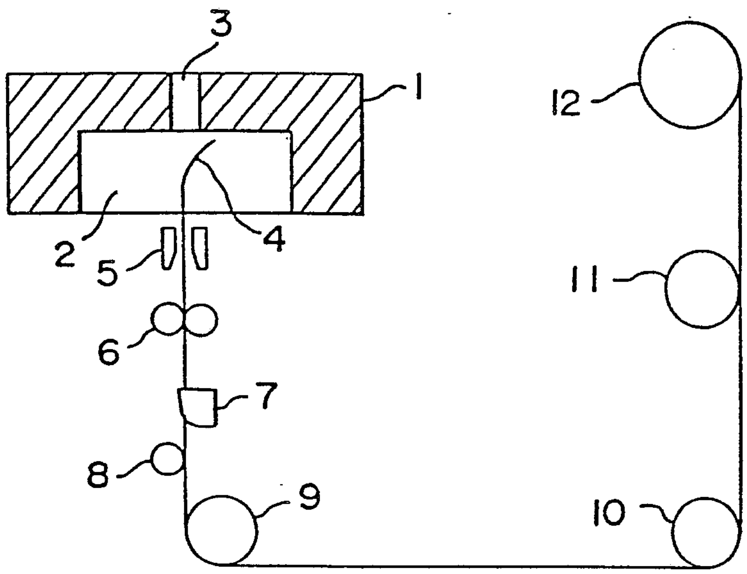


FIG. 2

(A)

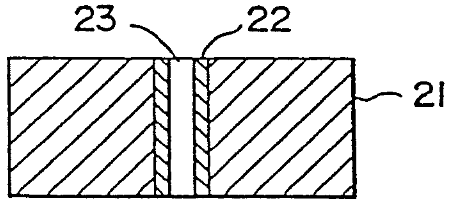


(B)

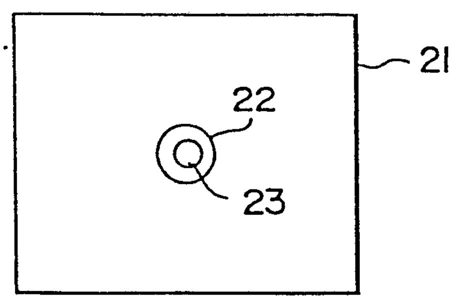

FIG. 3